(19) Europäisches Patentamt
European Patent Office
Office européen des brevets

(11) **EP 1 978 628 A2**

(12) **EUROPEAN PATENT APPLICATION**

(43) Date of publication:
**08.10.2008 Bulletin 2008/41**

(51) Int Cl.:
*H02M 5/458* (2006.01)

(21) Application number: **08006896.8**

(22) Date of filing: **04.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.04.2007 JP 2007099992**

(71) Applicant: **Hitachi Appliances, Inc.**
**Minato-ku**
**Tokyo 105-0022 (JP)**

(72) Inventors:
• **Li, Dongsheng**
**Chiyoda-ku**
**Tokyo 100-8220 (JP)**

• **Notohara, Yasuo**
**Chiyoda-ku**
**Tokyo 100-8220 (JP)**
• **Iwaji, Yoshitaka**
**Chiyoda-ku**
**Tokyo 100-8220 (JP)**
• **Kurita, Yoshiaki**
**Chiyoda-ku**
**Tokyo 100-8220 (JP)**

(74) Representative: **Beetz & Partner**
**Patentanwälte**
**Steinsdorfstrasse 10**
**80538 München (DE)**

(54) **Converter-inverter apparatus**

(57) The invention relates to a converter-inverter apparatus including the converter circuit (4) converting an AC current to a DC current, wherein the input side of the converter circuit (4) is connected to a three-phase AC power-supply (1) via a rector (3), and the smoothing capacitor (5) is connected to between DC terminals on output of the converter circuit (4), and an inverter circuit (6) for converting the DC current to a three-phase AC current is connected to between the DC terminals, a control unit (8) controls the converter and the inverter circuits, the converter and inverter circuits are driven by PWM in frequencies synchronized with each other between the converter and inverter circuits, the PWM frequency of one of the converter and inverter circuits is set in two times as high as the PWM frequency of the other circuit (4 or 6), and two-phase modulation scheme is employed as the PWM modulation scheme for the circuit (4 or 6) whose PWM frequency is set at the two-times value.

FIG.1

**Description**

BACKGROUND OF THE INVENTION

The present invention relates to a converter-inverter apparatus.

A motor driving system has become widely prevalent which is configured by including a PWM converter apparatus for converting a three-phase AC current to a DC current, and an inverter apparatus for converting the DC current to a three-phase AC current for the purpose of driving a three-phase AC motor.

In a system like this, a large-capacity smoothing capacitor is generally provided in order to suppress a variation in the intermediate DC voltage. An electrolytic capacitor used as the smoothing capacitor is large in volume, and thus has become an obstacle to small-sized implementation of the apparatus. Also, when charge/discharge current of the electrolytic capacitor is large in amount, there exist phenomena such as internal heat-liberation. These phenomena exert influences on usage life-expectancy of the apparatus.

Conventionally, in order to achieve small-capacity implementation of the smoothing capacitor, as disclosed in, e.g., JP-A-2006-67754, the following method has been proposed: The DC current from the converter circuit, the DC current to the inverter circuit, or the current flowing through the smoothing capacitor is detected, then controlling the capacitor current such that its value becomes equal to zero.

Also, in JP-A-4-121065, as a method for reducing the instantaneous charge/discharge current of the smoothing capacitor, there is disclosed a scheme of synchronizing PWM carrier wave of the converter circuit and that of the inverter circuit with each other.

SUMMARY OF THE INVENTION

According to the scheme like JP-A-2006-67754, however, it is impossible to reduce the pulse-like instantaneous charge/discharge current, although it is possible to lower average value of the current flowing through the smoothing capacitor. In other words, the use of the above-described method makes it possible to achieve the small-capacity implementation of the smoothing capacitor as well as to suppress the average DC-voltage variation. Nevertheless, it is impossible to solve the problems such as heat-liberation and life-expectancy shortening of the smoothing capacitor due to the instantaneous charge/discharge current.

Meanwhile, according to the scheme of JP-A-4-121065, it becomes possible to reduce the instantaneous charge/discharge current of the smoothing capacitor. It is required, however, that PWM carrier frequency of the converter circuit be set at being equal to PWM carrier frequency of the inverter circuit.

Generally speaking, a rector connected to the AC side of the converter circuit is desired to be as small-sized a circuit as possible. Accordingly, reactance of the rector is so designed as to be smaller than wire-wound inductance of the motor connected to the inverter. On account of this, reducing a ripple-current component requires that the PWM carrier frequency of the converter circuit be set at being higher than the PWM carrier frequency of the inverter circuit.

Also, when the converter-inverter system is used for driving compressor of an air conditioner, there exists the following request: As motor control over the compressor, the efficiency is wished to be enhanced by lowering the PWM carrier frequency. On the converter side, on the other hand, the PWM carrier frequency is wished to be set at a high value for the purpose of small-sized implementation of the AC rector.

Moreover, when AC power-supply voltage is high (e.g., 400-Volt power-supply), it is desired that output DC voltage be suppressed down to a lower value. This suppression makes it desirable to use two-phase modulation scheme, which exhibits a wide operation range as the PWM scheme.

In this way, there exists the request for wishing to set the different carrier frequencies between the converter and the inverter. Furthermore, there exists the request for wishing to employ the two-phase modulation scheme on the converter side. Simultaneously, a technology is strongly wished which allows the lowering in the capacity of the smoothing capacitor. The scheme of JP-A-4-121065, however, finds it impossible to satisfy these needs.

It is an object of the present invention to implement a converter-inverter apparatus which allows the small-capacity implementation and low heat-liberation implementation of the smoothing capacitor in the DC unit by reducing the instantaneous charge/discharge current to the smoothing capacitor, and also which allows the carrier frequency of the converter unit and that of the inverter unit to be set at mutually different values.

There is provided a converter-inverter apparatus which may include a converter circuit for converting a three-phase AC current to a DC current, configuration of the converter circuit being such that input side of the converter circuit may be connected to a three-phase AC power-supply via a rector, and/or such that a smoothing capacitor may be connected to between DC terminals on output side of the converter circuit, an inverter circuit for converting the DC current to a three-phase AC current, the inverter circuit may be connected to between the DC terminals, and/or a control unit for controlling the converter circuit and the inverter circuit, wherein the converter circuit and the inverter circuit may be driven by PWM (: Pulse Width Modulation), PWM frequencies may be synchronized with each other between the converter circuit and the inverter circuit, the PWM frequency of one of the converter circuit and the inverter circuit may be set at a value which may be two times as high as the PWM frequency of the other circuit, and two-phase modulation scheme being employed as PWM modulation scheme for the circuit whose PWM frequency may be set at the two-times value.

The use of the present invention makes it possible to implement the converter-inverter apparatus which allows the small-capacity implementation and low heat-liberation implementation of the smoothing capacitor in the DC unit, and also which allows the carrier frequency of the converter unit and that of the inverter unit to be set at mutually different values.

The above features may be combined in any way.

Other objects, features and advantages of the invention will become apparent from the following description of the embodiments of the invention taken in conjunction with the accompanying drawings.

BRIEF DESCRIPTION OF THE DRAWINGS

Fig. 1 is a configuration diagram of a converter-inverter apparatus which illustrates a first embodiment of the present invention;
Fig. 2 is a converter control block diagram in the first embodiment of the present invention;
Fig. 3 is an inverter control block diagram in the first embodiment of the present invention;
Fig. 4 illustrates voltage-instruction waveforms and carrier waveforms of the converter and the inverter;
Fig. 5 illustrates voltage-instruction waveforms, carrier waveforms, and current waveforms of the converter and the inverter;
Fig. 6 illustrates voltage-instruction waveforms, carrier waveforms, and current waveforms of the converter and the inverter;
Fig. 7 illustrates voltage-instruction waveforms, carrier waveforms, and current waveforms of the converter and the inverter;
Fig. 8 is an explanatory diagram for explaining a method of changing the carrier phase in the converter by 180 degrees;
Fig. 9 is a configuration diagram of the converter-inverter apparatus which illustrates a second embodiment of the present invention; and
Fig. 10 is a configuration diagram of a converter-inverter module which illustrates the second embodiment of the present invention.

DESCRIPTION OF THE EMBODIMENTS

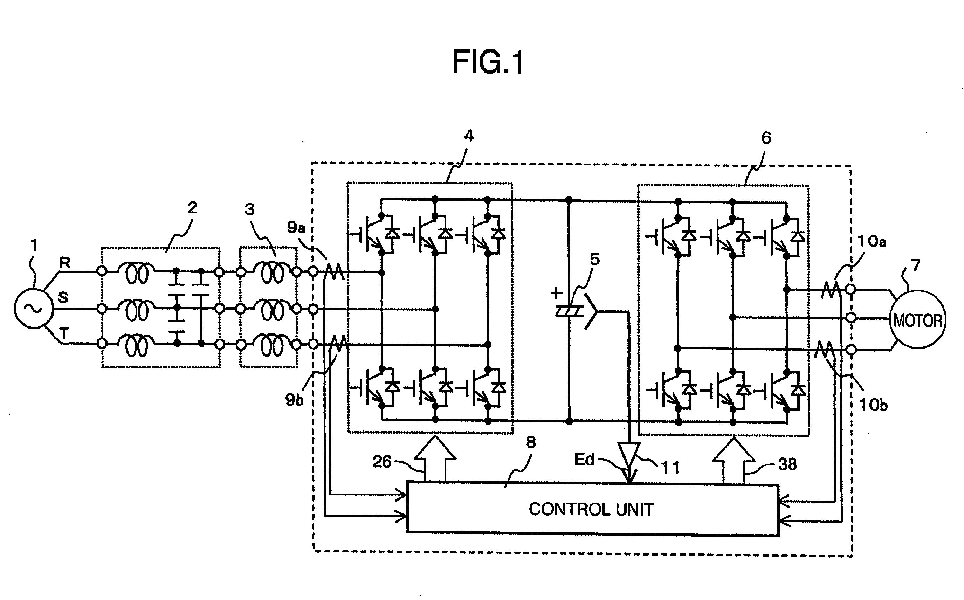

Hereinafter, referring to Fig. 1 through Fig. 8, the explanation will be given below concerning a first embodiment of the present invention.

(1st Embodiment)

Fig. 1 illustrates a configuration diagram of a converter-inverter apparatus for driving an electric motor in the first embodiment of the present invention.

As illustrated in Fig. 1, the converter-inverter apparatus includes a converter circuit 4 connected to a three-phase AC power-supply 1 via a ripple filter 2 and a rector 3, a smoothing capacitor 5 and an inverter circuit 6 which are connected to DC output terminals of the converter circuit 4, a motor 7, a control unit 8 for controlling the converter circuit 4 and the inverter circuit 6, current detectors 9a, 9b, 10a, and 10b for detecting input currents and output currents, and a DC-voltage detector 11. Incidentally, the control unit 8 is configured with a semiconductor computational-operation element such as microcomputer or DSP (: Digital Signal Processor).

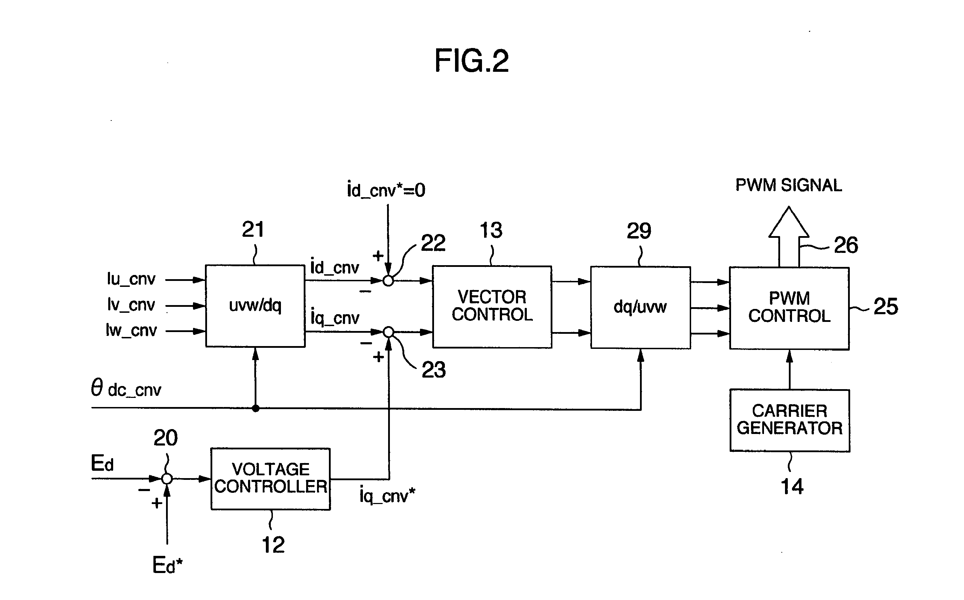

Fig. 2 illustrates a configuration diagram regarding "converter control" inside the control unit 8 in the above-described converter-inverter apparatus.

A deviation between a voltage signal (Ed) from the DC-voltage detector 11 and a DC-voltage instruction value (Ed*) is determined using a subtractor 20. Based on the deviation determined, a q-axis current instruction value (iq_cnv*) is created using a voltage controller 12. Next, detection signals from the input-current detectors 9a and 9b are converted into values on d and q coordinate axes, using a three-phase/two-axis converter 21. Moreover, a deviation between the output (id_cnv) from the three-phase/two-axis converter 21 and its instruction value (id_cnv*), and a deviation between the output (iq_cnv) therefrom and its instruction value (iq_cnv*) are determined, using subtractors 22 and 23 respectively.

Computational processing by the three-phase/two-axis converter 21 will be explained later. Then, based on the deviations determined, instruction voltages on the d and q axes are calculated, using a vector controller 13. Here, the d-axis current instruction value (id_cnv*) is set at 0 in order to minimize an invalid current component of the input current. Next, a three-phase voltage instruction for the converter is created, using a two-axis/three-phase converter 24, and using the instruction voltages on the d and q axes and phase information (θdc_cnv). Computational processing by the two-axis/three-phase converter 24 will be explained later. Finally, a PWM signal 26 in each phase is outputted by applying a PWM controller 25's PWM modulation to a carrier wave from a carrier generator 14 in accordance with the three-phase voltage instruction from the two-axis/three-phase converter 24, then inputting the PWM signal 26 into the converter circuit 4.

The computational processing by the three-phase/two-axis converter 21 is as follows:

Based on the three-phase AC current and the phase information (θdc_cnv), the three-phase/two-axis converter 21 computes the d-axis current (Id_cnv) and the q-axis current (Iq_cnv) in accordance with the following Expressions:

$$\begin{pmatrix} I\alpha \\ I\beta \end{pmatrix} = \frac{2}{3} \begin{pmatrix} \cos(0) & \cos(2\pi/3) & \cos(4\pi/3) \\ \sin(0) & \sin(2\pi/3) & \sin(4\pi/3) \end{pmatrix} \begin{pmatrix} Iu\_cnv \\ Iv\_cnv \\ Iw\_cnv \end{pmatrix}$$

$$\begin{pmatrix} Id\_cnv \\ Iq\_cnv \end{pmatrix} = \begin{pmatrix} \cos(\theta dc\_cnv) & -\sin(\theta dc\_cnv) \\ \sin(\theta dc\_cnv) & \cos(\theta dc\_cnv) \end{pmatrix} \begin{pmatrix} I\alpha \\ I\beta \end{pmatrix}$$

The computational processing by the two-axis/three-phase converter 24 is as follows:

Based on a d-axis voltage instruction value (Vd_cnv*), a q-axis voltage instruction value (Vq_cnv*), and the phase information (θdc_cnv), the two-axis/three-phase converter 24 outputs the three-phase voltage instruction value (Vu_cnv*, Vv_cnv*, Vw_cnv*) in accordance with the following Expressions:

$$\begin{pmatrix} V_\alpha \\ V_\beta \end{pmatrix} = \begin{pmatrix} \sin(\theta dc\_cnv) & \cos(\theta dc\_cnv) \\ -\cos(\theta dc\_cnv) & \sin(\theta dc\_cnv) \end{pmatrix} \begin{pmatrix} V_{d\_cnv}^* \\ V_{q\_cnv}^* \end{pmatrix}$$

$$\begin{pmatrix} V_{u\_cnv}^* \\ V_{v\_cnv}^* \\ V_{w\_cnv}^* \end{pmatrix} = \begin{pmatrix} \cos(0) & \sin(0) \\ \cos(2\pi/3) & \sin(2\pi/3) \\ \cos(4\pi/3) & \sin(4\pi/3) \end{pmatrix} \begin{pmatrix} V_\alpha \\ V_\beta \end{pmatrix}$$

Only the two-phase signals, i.e., the U-phase and W-phase signals, are given as the detection signals from the input-current detectors 9a and 9b. The sum of the three-phase signals, however, is equal to zero. Based on this condition, the remaining V-phase detection signal (Iv_cnv) can be determined from the two detection signals of the detectors 9a and 9b in accordance with the following Expression:

$$Iv\_cnv = -(Iu\_cnv + Iw\_cnv)$$

, where Iu_cnv = the output of the detector 9a, and Iw_cnv = the output of the detector 9b.

Also, the phase information (θdc_cnv) is detected using a not-illustrated phase sensor. Otherwise, the phase information (θdc_cnv) can be estimated by computation, using the sensor-less control method disclosed in JP-A-2006-67754.

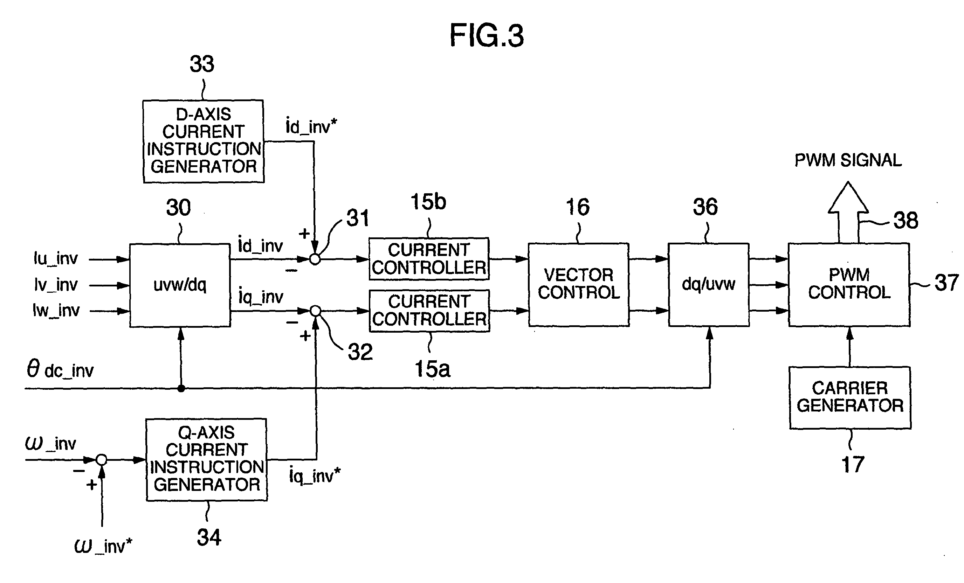

Fig. 3 illustrates a configuration diagram regarding "inverter control" inside the control unit 8 in the above-described converter-inverter apparatus. In a configuration similar to the one illustrated in Fig. 2, detection signals from the output-current detectors 10a and 10b are converted into values on the d and q coordinate axes, using a three-phase/two-axis converter 30. Moreover, a deviation between the output (id_inv) from the three-phase/two-axis converter 30 and its instruction value (id_inv*), and a deviation between the output (iq_inv) therefrom and its instruction value (iq_inv*) are determined, using subtractors 31 and 32 respectively. In accordance with operation situation of the motor 7, a d-axis current instruction generator 33 generates the d-axis current instruction value (id_inv*) which causes the motor current to become its minimum value. Based on a motor-velocity deviation (ω_inv*-ω_inv), i.e., an output from a subtractor 35, a q-axis current instruction generator 34 generates the q-axis current instruction value (iq_inv*) which is equivalent to acceleration torque amount and load torque amount. Computational processing by the three-phase/two-axis converter 30 is the same as the one by the three-phase/two-axis converter 21 except that all the suffixes of the variables become _inv. Then, based on the deviations determined, instruction voltages on the d and q axes are calculated, using current controllers 15a and 15b and a vector controller 16. Next, a three-phase voltage instruction for the inverter is created, using a two-axis/three-phase converter 36, and using the instruction voltages on the d and q axes and phase information (θdc_inv). Computational processing by the two-axis/three-phase converter 36 is the same as the one by the two-axis/three-phase converter 24 except that all the suffixes of the variables become _inv. Finally, a PWM signal 38 in each phase is outputted by applying a PWM controller 37's PWM modulation to a carrier wave from a carrier generator 17 in accordance with the three-phase voltage instruction from the two-axis/three-phase converter 36, then inputting the PWM signal 38 into the inverter circuit 6.

Only the two-phase signals, i.e., the U-phase and W-phase signals, are given as the detection signals from the output-current detectors 10a and 10b. The sum of the three-phase signals, however, is equal to zero. Based on this condition, the remaining V-phase detection signal (Iv_inv) can be determined from the two detection signals of the detectors 10a and 10b in accordance with the following Expression:

$$\text{Iv\_inv} = -(\text{Iu\_inv} + \text{Iw\_inv})$$

, where Iu_inv = the output of the detector 10a, and Iw_inv = the output of the detector 10b.

Also, the phase information (θdc_inv) is detected using a not-illustrated phase sensor. Otherwise, the phase information (θdc_inv) can be estimated by computation, using the sensor-less control method disclosed in JP-A-2006-67754.

Here, PWM frequency of the converter circuit 4 is set at a value which is two times as high as PWM frequency of the inverter circuit 6. As a result of this setting, the PWM frequency of the converter circuit 4 becomes higher. This condition allows small-sized implementation of the ripple filter 2 and the rector 3, and allows a reduction in an input ripple current. Also, in order to reduce the switching loss, two-phase modulation scheme is employed as the PWM control over the converter circuit 4. This two-phase modulation scheme is the following scheme: Of the one-period time-interval of a fundamental-wave period, the switching equivalent to one phase is not performed during the time-interval of substantially one-third of the one-period time-interval. The two-phase modulation scheme is used for reducing the switching loss.

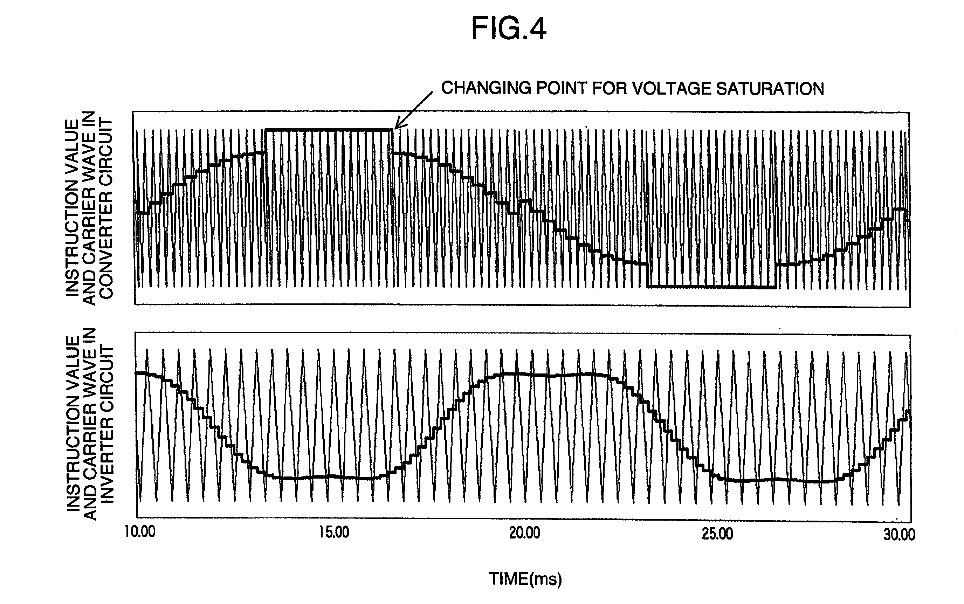

Also, in this two-phase modulation scheme, as is illustrated at the upper stage in Fig. 4, waveform of the instruction value is set such that it becomes substantially symmetrical between the positive and negative values.

Incidentally, three-phase modulation scheme or two-phase modulation scheme (i.e., inter-line modulation) may be employed as the PWM control over the inverter circuit 6. In the present embodiment, the explanation will be given employing the three-phase modulation (i.e., hip modulation).

In a case where the above-described PWM control method is used, Fig. 4 illustrates carrier wave waveform and one-phase-equivalent instruction value waveform of the converter circuit, and carrier wave waveform and one-phase-equivalent instruction value waveform of the inverter circuit.

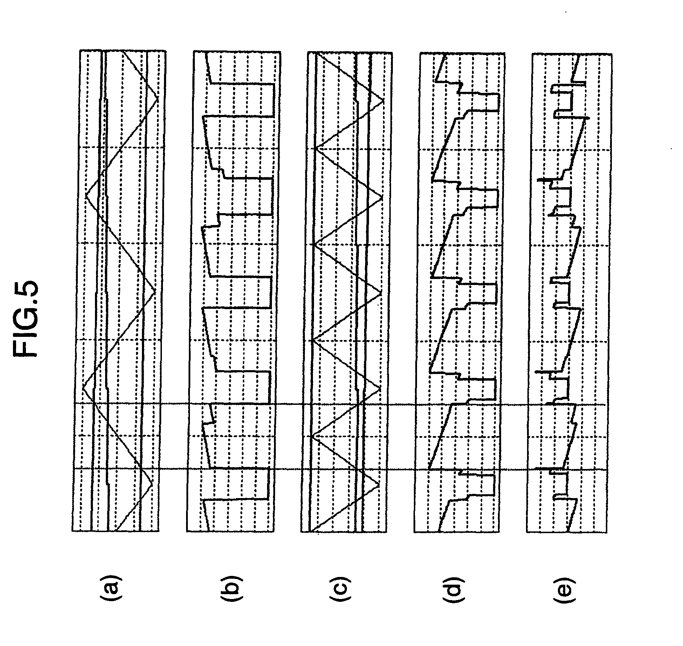

In the case where the above-described PWM control method is used, Fig. 5 illustrates (a) carrier wave waveform of the inverter circuit and three-phase voltage instruction waveform for the inverter circuit, (b) discharge current waveform from the smoothing capacitor to the inverter circuit, (c) carrier wave waveform of the converter circuit and three-phase voltage instruction waveform for the converter circuit, (d) charge current waveform from the converter circuit to the smoothing capacitor, and (e) charge/discharge current waveform to the smoothing capacitor.

As illustrated in Fig. 5, the charge current from the converter circuit and the discharge current to the inverter circuit become pulse-like currents on account of the PWM control signals. Also, the discharge-current pulse from the smoothing capacitor to the inverter circuit corresponds to intersection points of maximum value or minimum value of the three-phase voltage instruction for the inverter circuit and the carrier wave. Similarly, the charge-current pulse from the converter circuit to the smoothing capacitor corresponds to intersection points of maximum value or minimum value of the three-phase voltage instruction for the converter circuit and the carrier wave.

As illustrated in Fig. 5, the use of the above-described PWM control method makes it possible to synchronize the two current pulses (i.e., the charge-current pulse and the discharge-current pulse) with each other, thereby making it possible to reduce the charge/discharge current to the smoothing capacitor. This allows small-capacity implementation and long life-expectancy implementation of the smoothing capacitor.

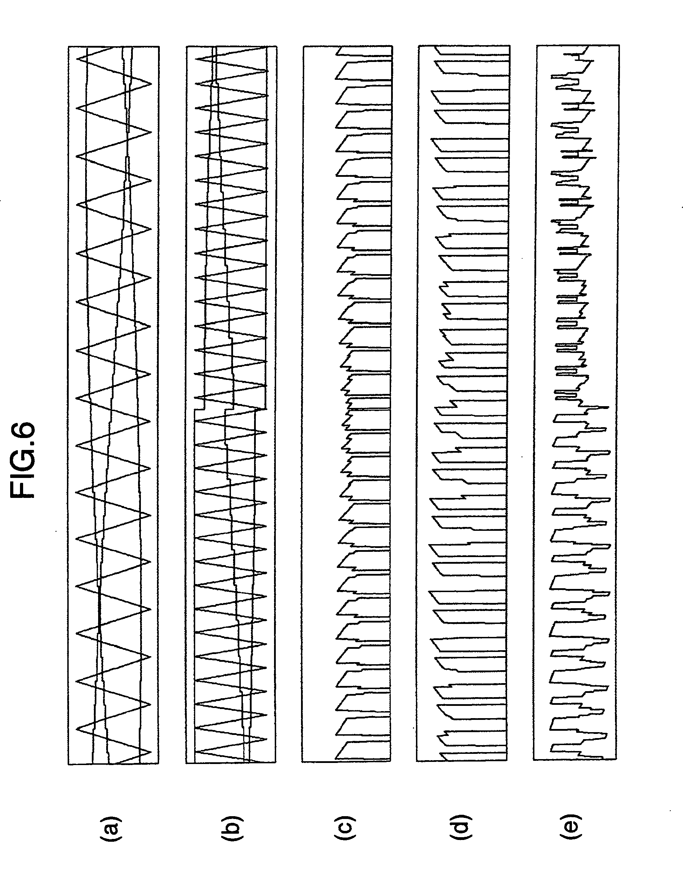

In the above-described PWM control method, however, depending on a condition concerned, there are some cases where it is impossible to synchronize the charge-current pulse and the discharge-current pulse with each other. In a case where only the above-described PWM control method is used, Fig. 6 illustrates (a) the carrier wave waveform of the inverter circuit and the three-phase voltage instruction waveform for the inverter circuit, (b) the carrier wave waveform of the converter circuit and the three-phase voltage instruction waveform for the converter circuit, (c) the charge current waveform from the converter circuit to the smoothing capacitor, (d) the discharge current waveform from the smoothing capacitor to the inverter circuit, and (e) the charge/discharge current waveform to the smoothing capacitor.

As illustrated in Fig. 6, when the two current pulses are synchronized with each other (i.e., the right-half part), the charge/discharge current to the smoothing capacitor becomes small. Conversely, when the two current pulses are not synchronized with each other (i.e., the left-half part), the charge/discharge current to the smoothing capacitor becomes large.

This phenomenon is a problem caused by the two-phase modulation scheme in the PWM control over the converter circuit. In the two-phase modulation scheme, the time-interval during which the switching is halted exists by substantially the one-third of a one-period time-interval. In order to implement this "halt of switching", the voltage instructions in each phase are saturated alternately. At a point-in-time when the phase falling into this saturation state changes, the phases of the current pulses change. This change prevents establishment of the synchronization between the charge-current pulse to the smoothing capacitor and the discharge-current pulse from the smoothing capacitor.

Accordingly, in order to cause the charge-current pulse and the discharge-current pulse to be always synchronized with each other, the following method is employed: Namely, phase of the PWM carrier signal in the converter circuit is changed by 180 degrees at the changing point for the voltage saturation in the two-phase modulation scheme for the converter circuit (i.e., the point at which the phase in which the switching is halted, the feature of the two-phase modulation scheme, is changed).

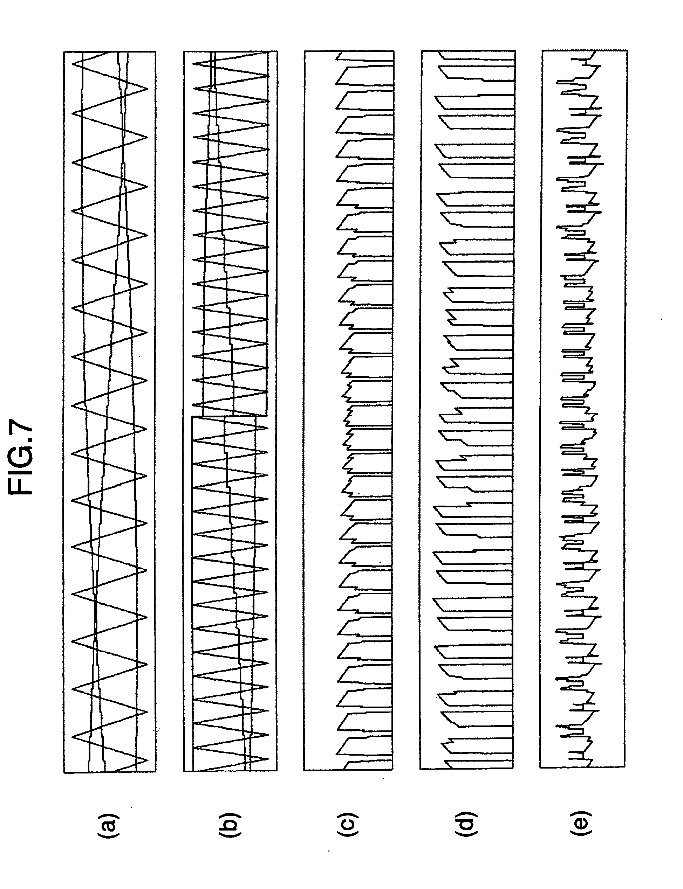

For comparison, Fig. 7 illustrates waveforms in the case where the above-described phase-changing method is employed. Fig. 7 clearly indicates that the charge-current pulse to the smoothing capacitor and the discharge-current pulse from the smoothing capacitor are always synchronized as compared with the current waveforms in Fig. 6, and that the charge/discharge current to the smoothing capacitor becomes small.

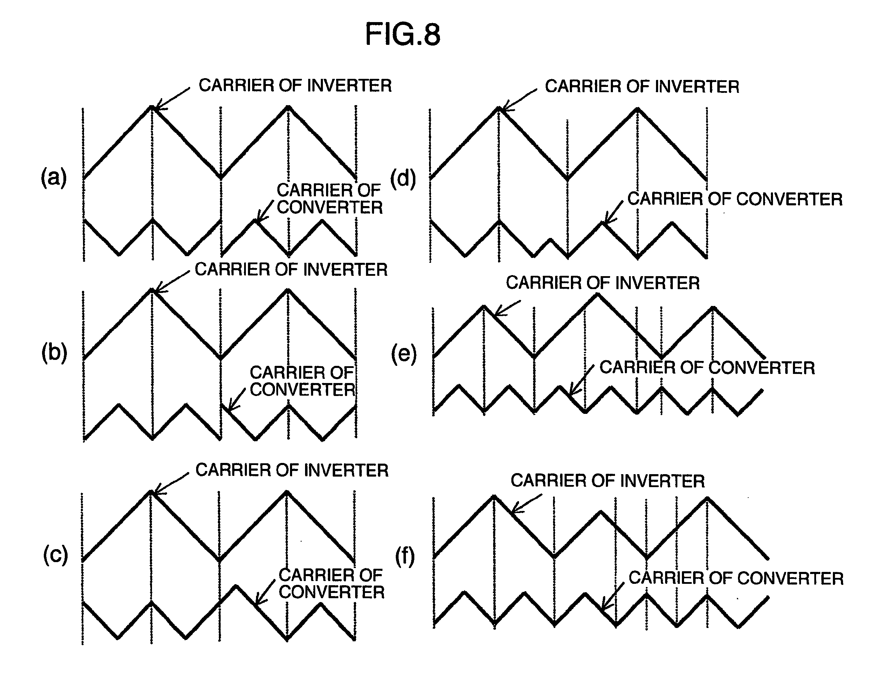

As the method of changing the phase of the PWM carrier signal used for the PWM control over the converter circuit, six patterns exist as are illustrated in Fig. 8. In Fig. 8, (a) and (b) illustrate methods of changing the phase of the carrier wave in the converter circuit by 180 degrees by amending the phase of the carrier wave in the converter circuit (actually, by setting at zero or presetting the period-counter value of a PWM output timer of a microprocessor in the control unit 8).

In Fig. 8, (c) and (d) illustrate methods of changing the phase by 180 degrees by shortening or extending one period of the carrier wave in the converter circuit (actually, the period of the carrier signal is adjusted by adjusting (i.e., shortening or extending) the period value of the timer or counter of the microprocessor).

In Fig. 8, (e) and (f) illustrate methods of changing the phase by 180 degrees by shortening or extending one period of the carrier wave in the inverter circuit. At the time of actual usage, it is preferable to select a pattern which is easy to implement depending on specification of the control circuit. Also, it is possible to use a plurality of patterns simultaneously in a manner of selecting them on each usage basis.

When the converter-inverter system according to the present invention is applied to the driving of compressor's motor of an air conditioner, the triangular-wave carrier frequency of the converter circuit is set at a value which is two times as high as that of the inverter circuit. Moreover, the above-described two-phase modulation scheme is employed on the converter side. This setting implements the system which allows the small-capacity implementation of the smoothing capacitor. In this case, the carrier frequency of the converter circuit is two times that of the inverter circuit. Because of the employment of the two-phase modulation scheme, however, it turns out that the switching is halted during the one-third time-interval. As a result of this, the average switching frequency of the converter circuit becomes equal to 1. 33 times (= 2 x 2/3) that of the inverter circuit. In an actual situation, it is appropriate enough to consider that the average switching frequency of the converter circuit falls in a range of about 1. 2 to 1. 5 times that of the inverter circuit. This is because the switching number-of-times becomes somewhat fluctuated at the changing time for the voltage-saturation phase.

In the present embodiment, the triangular-wave carrier frequency of the converter circuit has been set at the two times that of the inverter circuit. Depending on an actual application, however, it is allowable to set the triangular-wave carrier frequency of the inverter circuit at the two times that of the converter circuit, i.e., a setting method contrary to the above-described setting method. In this case, reversing the above-described control methods for the converter circuit and the inverter circuit allows acquisition of a similar ripple-current reduction effect.

[2nd Embodiment]

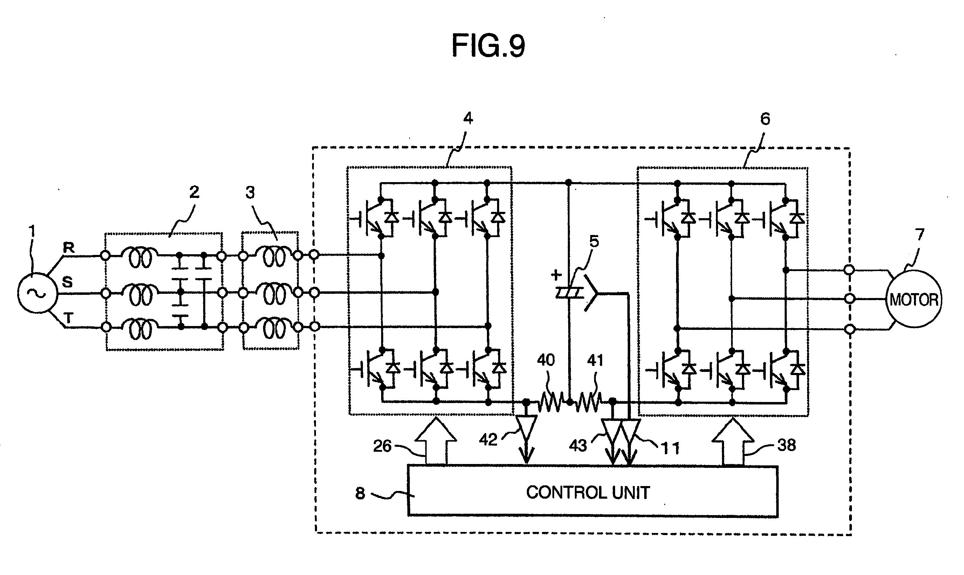

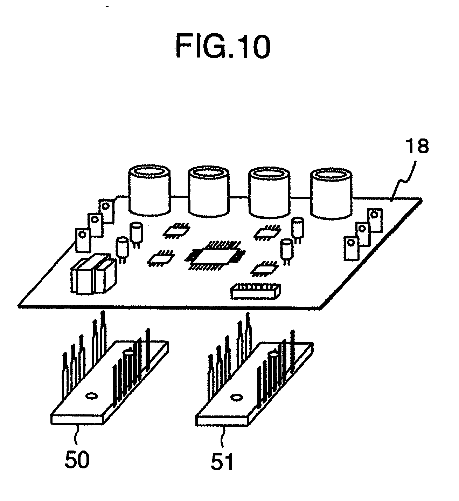

Fig. 9 illustrates another configuration diagram of the converter-inverter apparatus for driving an electric motor as a second embodiment of the present invention. Fig. 10 illustrates an apparatus acquired by forming the converter-inverter apparatus in Fig. 9 into a module as an example of the final form of the product according to the present invention. Namely, the converter-inverter apparatus is formed into the module by arranging, on a control-unit board 18, the power-supply of the control circuit, the control microprocessor, the detection circuit, and power-system switching elements (i.e., IGBT modules 50 and 51) of the converter circuit 4 and the inverter circuit 6. This formation into the module permits small-sized implementation of the apparatus as well as implementation of a reduction in the apparatus cost. Incidentally, in Fig. 10, the IGBT modules 50 and 51 are illustrated in such a manner as to be apart from the board 18. Actually, however, the IGBT modules are connected onto the board 18 with the use of connectors.

The point in which the apparatus of the embodiment illustrated in Fig. 9 differs from the apparatus illustrated in Fig. 1 is its detection method of detecting the three-phase AC currents. In the apparatus of the embodiment illustrated in Fig. 9, instead of detecting the three-phase AC currents directly, two bus-bar currents of the converter circuit 4 and the inverter circuit 6 are detected using shunt resistors 40 and 41. Voltages at the shunt resistors 40 and 41 are detected using current detectors 42 and 43, then being inputted into the control unit 8. The microprocessor in the control unit 8 determines the three-phase AC currents in the converter circuit 4 and the inverter circuit 6. This determination processing is performed based on the bus-bar current values detected, and after the switching state of each converter is taken into consideration. Also, in the method illustrated in Fig. 9, the bus-bar currents are detected using the shunt resistors. Not being limited to the shunt resistors, however, an appliance such as current sensor may also be used in an actual situation. According to the present embodiment, it becomes possible to omit the current sensor in comparison with the first embodiment.

Except for the above-described detection method, methods similar to the ones in the first embodiment are used for the other control methods and units.

The above mentioned features and embodiments may be combined partly or as a whole in any way.

**Claims**

1. A converter-inverter apparatus, comprising:

   a converter circuit (4) for converting an AC current to a DC current, configuration of said converter circuit (4) being such that input side of said converter circuit (4) is connected to a three-phase AC power-supply (1) via a rector (3), and such that a smoothing capacitor (5) is connected to between DC terminals on output side of said converter circuit (4);
   an inverter circuit (6) for converting said DC current to a three-phase AC current, said inverter circuit (6) being connected to between said DC terminals; and
   control means (8) for controlling said converter circuit (4) and said inverter circuit (6), wherein
   said converter circuit (4) and said inverter circuit (6) are driven by PWM,
   PWM frequencies being synchronized with each other between said converter circuit (4) and said inverter circuit (6),
   said PWM frequency of one of said converter circuit (4) and said inverter circuit (6) being set at a value which is two times as high as said PWM frequency of said other circuit (4 or 6), and two-phase modulation scheme being employed as said PWM modulation scheme for said circuit (4 or 6) whose PWM frequency is set at said two-times value.

2. The converter-inverter apparatus according to Claim 1, wherein
   said two-phase modulation scheme is a scheme that, of one-period time-interval of a basic-wave period, there is provided a time-interval which is substantially one-third of said one-period time-interval, and in which switching equivalent to one phase is not performed.

3. The converter-inverter apparatus according to Claim 1 or 2, wherein
   said PWM frequency of said converter (4) is set at said value which is two times as high as said PWM frequency of said inverter (6).

4. The converter-inverter apparatus according to at least one of Claims 1-3, wherein,
   when phase in which switching is halted, i.e., feature of said two-phase modulation scheme, is changed, phase of a carrier signal used for said PWM is modified by 180 degrees in synchronization with a timing of said phase change.

**5.** The converter-inverter apparatus according to Claim 4, wherein
said carrier signal whose phase is modified by 180 degrees is a carrier signal of said converter (4) .

**6.** The converter-inverter apparatus according to Claim 4 or 5, wherein
an internal timer or counter of a microprocessor is used as generation means for generating said carrier signal used for said PWM, said timer or counter being set at zero or being preset.

**7.** The converter-inverter apparatus according to Claim 1, wherein,
when phase in which switching in said two-phase modulation scheme is halted is changed, period of a carrier signal used for said PWM is modified in synchronization with a timing of said phase change.

**8.** The converter-inverter apparatus according to Claim 7, wherein
said carrier signal whose period is modified is a carrier signal of said converter (4).

**9.** The converter-inverter apparatus according to Claim 7 or 8, wherein
an internal timer or counter of a microprocessor is used as generation means for generating said PWM carrier signal, period of said timer or counter being adjusted.

**10.** The converter-inverter apparatus according to Claim 3, wherein,
when phase in which switching is halted, i.e., feature of said two-phase modulation scheme, is changed, period of a carrier signal used for said PWM of said inverter (6) is modified in synchronization with a timing of said phase change.

**11.** A converter-inverter apparatus, comprising:

a converter circuit (4) for converting a three-phase AC current to a DC current, configuration of said converter circuit (4) being such that input side of said converter circuit (4) is connected to a three-phase AC power-supply (1) via a rector (3), and such that a smoothing capacitor (5) is connected to between DC terminals on output side of said converter circuit (4);
an inverter circuit (6) for converting said DC current to a three-phase AC current, said inverter circuit (6) being connected to between said DC terminals; and
control means (8) for controlling said converter circuit (4) and said inverter circuit (6), wherein
average switching frequency of a PWM signal for switching said converter circuit (4) falls in a range of 1. 2 to 1. 5 times as high as average switching frequency of a PWM signal for switching said inverter circuit (6).

# FIG.1

EP 1 978 628 A2

# FIG.2

EP 1 978 628 A2

# FIG.3

EP 1 978 628 A2

# FIG.4

CHANGING POINT FOR VOLTAGE SATURATION

INSTRUCTION VALUE AND CARRIER WAVE IN CONVERTER CIRCUIT

INSTRUCTION VALUE AND CARRIER WAVE IN INVERTER CIRCUIT

10.00          15.00          20.00          25.00          30.00

TIME(ms)

EP 1 978 628 A2

# FIG.5

(a)

(b)

(c)

(d)

(e)

# FIG.6

(a)

(b)

(c)

(d)

(e)

EP 1 978 628 A2

# FIG.7

(a)

(b)

(c)

(d)

(e)

EP 1 978 628 A2

# FIG.8

(a) CARRIER OF INVERTER / CARRIER OF CONVERTER

(b) CARRIER OF INVERTER / CARRIER OF CONVERTER

(c) CARRIER OF INVERTER / CARRIER OF CONVERTER

(d) CARRIER OF INVERTER / CARRIER OF CONVERTER

(e) CARRIER OF INVERTER / CARRIER OF CONVERTER

(f) CARRIER OF INVERTER / CARRIER OF CONVERTER

# FIG.9

EP 1 978 628 A2

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006067754 A

- JP 4121065 A